**Europäisches Patentamt**

**European Patent Office**

**Office européen des brevets**

(19)

(11) Veröffentlichungsnummer: **0 168 779**
**B1**

(12) # EUROPÄISCHE PATENTSCHRIFT

(45) Veröffentlichungstag der Patentschrift:
08.03.89

(21) Anmeldenummer: 85108656.1

(22) Anmeldetag: 11.07.85

(51) Int. Cl.⁴: **B 66 D 1/36,** B 66 D 1/60,
A 01 G 23/00

(54) Verfahren und Vorrichtung zum Vorliefern von Holzstämmen.

(30) Priorität: 16.07.84 DE 3426128

(43) Veröffentlichungstag der Anmeldung:
22.01.86 Patentblatt 86/4

(45) Bekanntmachung des Hinweises auf die Patenterteilung:
08.03.89 Patentblatt 89/10

(84) Benannte Vertragsstaaten:
AT CH FR IT LI NL SE

(56) Entgegenhaltungen:
DD-A-128 074
DE-B-1 946 616
DE-C-586 616
GB-A-1 283 056

(73) Patentinhaber: Gebrüder Jäckle GmbH Maschinen-
& Gerätebau, Büsslingerstrasse 25, D-7709
Hilzingen 3 (DE)

(72) Erfinder: Jäckle, Lothar, Büsslingerstrasse 25,
D-7709 Hilzingen 3 (DE)
Erfinder: Jäckle, Georg, Büsslingerstrasse 25,
D-7709 Hilzingen 3 (DE)
Erfinder: Jäckle, Franz, Büsslingerstrasse 25,
D-7709 Hilzingen 3 (DE)

(74) Vertreter: Weiss, Peter, Schlachthausstrasse 1
Postfach 466, D-7700 Singen a.H. (DE)

## Beschreibung

Die Erfindung betrifft ein Verfahren zum Vorliefern von Holzstämmen mit einem Zugseil, welches von einer Winde in Richtung auf den zu rückenden Stamm hin abgerollt und nach dem Anbinden des Stammes wieder eingeholt wird, wobei das Zugseil nach der Winde über eine ortsveränderbare Rolle od. dgl. geführt wird, sowie eine Vorrichtung hierfür.

Beim Vorliefern von schwachen Bäumen aus dichten Beständen mit beispielsweise einem Schlepper muß die Zugmaschine in jeder Seillinie genau in Stellung gebracht werden. Dies ist zeitaufwendig und vielfach ungenau. Da die Seillinien nur 0,5 - 1 m breit sind, verursacht eine ungenaue Stellung des Schleppers Rückeschäden.

Rückeschäden treten zum einen dann auf, wenn die zu rückenden Holzstämme an Bäumen des verbleibenden Bestandes scheuern. Zum anderen wird das Ende, meist der Stammfuß, des zu rückenden Stammes über den Waldboden geschleift, so daß es an verbleibenden Stämmen Wurzelanlaufschäden gibt. Diese Schäden an Wurzelanläufen sind bevorzugte Eintrittsstellen für Pilze, beispielsweise die Rotfäule bei Fichtenbeständen.

Aus der DE-C-586 616 ist beispielsweise eine fahrbare Motorwinde zum Ziehen eines Gartenbaugerätes, insbesondere eines Pfluges bekannt. Dabei wird ein Zugseil von einer Motorwinde abgerollt und über eine obere Umlenkrolle zu einer bodennahen Umlenkrolle geführt. Beide Umlenkrollen sind in ihrer Achsenrichtung verschiebbar und feststellbar. Hierdurch wird zwar die Lage des Zugseiles senkrecht zur Einziehrichtung verändert. Allerdings können bei einer Übertragung dieser Erfindung auf eine Vorrichtung zum Rücken von Holzstämmen keine Wurzelanlaufschäden vermieden werden. Der zu rückende Stamm wird nach wie vor auf dem Boden geschleift.

Der Erfinder hat sich zum Ziel gesetzt, ein Verfahren und eine Vorrichtung der eingangs erwähnten Art zu entwickeln, mit deren Hilfe ein Vorliefern erfolgen kann, das für den Bestand möglichst schonend ist. Neben dieser Bestandsschonung soll die Wirtschaftlichkeit des Rückeverfahrens gesteigert werden.

Zur Lösung dieser Aufgabe führt ein Verfahren, bei dem die Rolle etwa senkrecht zur Vorlieferrichtung der Holzstämme in einer solchen Höhe vom Boden bewegt wird, daß das angebundene Ende des vorzuliefernden Stammes beim Einholen des Zugseiles angehoben wird.

Das bedeutet zum einen, daß die Bedienungsperson, welche das Seil in den Bestand hinauszieht, beim Zurückschauen zur Winde begutachten kann, ob der aus dem Bestand zu holende Stamm möglicherweise an dem verbleibenden Bestand hängenbleiben kann. Hierzu steht dann der Bedienungsperson die weiter unten beschriebene Vorrichtung zum Verändern des Ausgangspunktes des Zugseiles zur Verfügung, welche ferngesteuert werden kann.

Zum anderen wird beim Einholen des Zugseiles das Ende des Stammes angehoben, so daß dieses nicht mehr den Waldboden pflügt und deshalb entsprechende Bestandsschäden bzw. Wurzelanlaufschäden vermieden werden.

Bei einer entsprechenden Vorrichtung soll die Rolle im wesentlichen senkrecht zur Vorlieferrichtung der Holzstämme entlang einer an einer Zugmaschine od. dgl. befestigten Führung ortsveränderbar angeordnet sein, wobei die Führung in einer solchen Höhe zum Boden verläuft, daß das angebundene Ende des Stammfußes beim Einholen des Zugseiles angehoben ist.

Erfindungsgemäß ist hierfür ein Führungsrohr vorgesehen, auf welchem innerhalb einer bestimmten Strecke eine Rohrhülse bewegbar ist, an der die Umlenkrolle mit dem Zugseil hängt.

Bevorzugt soll diese Rohrhülse wie eine Laufkatze auf dem Führungsrohr gleitbar angeordnet sein, wobei sie über ein Antriebselement mit einem Antrieb verbunden ist. Dieser Antrieb wiederum kann ferngesteuert die Rohrhülse bewegen.

In der Praxis genügt für eine Länge eines Führungsrohres etwa 5 Meter. Wenn nun die Bedienungsperson sich von dem Führungsrohr mit dem Zugseil entfernt, kann sie begutachten, ob die zu rückenden Stämme genügend Bewegungsspielraum beim Schleifen haben. Sollte dies nicht der Fall sein, wird die Ausgangsposition des Zugseiles durch Fernsteuerung des Antriebes und der Rohrhülse verändert.

Bevorzugt weist der Antrieb eine Antriebswelle mit einem Antriebsrad auf, welchem Nuten umfangsseitig eingeformt sind, die den Gliedern einer Kette nachgebildet sind. Ebenso soll bevorzugt das Antriebselement zumindest zum Teil aus einer passenden Kette bestehen, während der andere Teil ein normales Drahtseil sein kann.

Im Rahmen der Erfindung liegt, daß das Führungsrohr einerseits von einer Aufnahmebuchse begrenzt ist, welche auch den Antrieb trägt, andererseits in einer Hülse steckt, wobei sowohl Aufnahmebuchse wie auch Hülse über je ein Gelenkteil mit einem Stützschild bzw. einem Stirngerüst verbunden sind. Durch Stützschild bzw. Stirngerüst wird das Führungsrohr in einer bestimmten Höhe vom Erdboden gehalten, was den erheblichen Vorteil mit sich bringt, dass die einzuholenden Stämme immer etwas angehoben werden, da das Zugseil in einem bestimmten Winkel zum Erdboden verläuft.

Die Gelenkteile bestehen aus jeweils zwei zueinander senkrecht angeordneten Drehgelenken. Dadurch können sowohl Stützschild wie auch Stirngerüst den jeweils gegebenen örtlichen Verhältnissen angepasst werden, ohne dass das Führungsrohr eine derartige Anpassung behindern würde. An dem Stirngerüst soll weiterhin eine Winde für ein Seil festgelegt sein, mittels welchem die Vorrichtung entgegen der Zugrichtung des Zugseils an Nachbarstämmen oder dergleichen gehalten werden kann. Der Stützschild wiederum soll erfindungsgemäss die Winde für das Zugseil tragen, das dann von dieser Winde gegebenenfalls über eine Umlenkrolle zu der oben näher geschilderten Rolle an der Rohrhülse als Ausgangsposition verläuft.

Dieser Stützschild soll jedoch noch eine zweite Funktion erfüllen. In der Regel eignet sich das über die Rohrhülse geleitete Zugseil nur für das Rücken von Schwachholz, da bei Stämmen höherer Stärkeklasse die Zugkraft für die Vorrichtung zu stark würde. Um diesem Nachteil in begrenztem Umfang entgegenwirken zu können, hat der Erfinder an dem Stützschild eine weitere Umlenkrolle und gegebenenfalls eine zweite Winde für ein zweites Zugseil vorgesehen, mittels welchem Stämme höherer Stärkeklasse nach dem altbekannten Rückeverfahren aus dem Bestand gezogen werden können. Selbstverständlich ist es auch möglich, das Zugseil und die Winde für das Schwachholz gleichzeitig durch eine geringe Umrüstung auch über die Umlenkrolle für das Starkholz zu benutzen. Erwähnt werden muss noch, dass der Stützschild mit einem eigentlichen Schild zum Abfangen insbesondere der starken Stämme versehen ist und auch Stelzen aufweist, welche sich beispielsweise beim Heranziehen von Stämmen höherer Stärkeklasse in den Waldboden eingraben und so ein Widerlager bilden.

Die Vorrichtung ist so ausgelegt, dass sie allein stehend oder selbst-fahrbar in den Rückegassen Anwendung finden kann. Erfindungsgemäss soll sie aber auf sehr einfache Weise an bekannten Zugmaschinen festgelegt werden können, wobei dann deren Hydraulik auch für den Antrieb der Winde bzw. der Rohrhülse Verwendung finden kann. Der Stützschild soll dabei am Hydraulikgestänge des Schleppers festgelegt und mit diesem anheb- bzw. absenkbar sein. Zusätzlich ist noch ein Zylinder-Kolben-System vorgesehen, durch welches der Stützschild in eine geeignete Lage zur Fahrtrichtung der Zugmaschine gestellt werden kann. Das Stirngerüst ist dagegen auf der Frontseite der Zugmaschine festgelegt.

Auf diese Weise ensteht eine sehr flexible und vielseitig anwendbare Einsatzmaschine für das Rücken insbesondere von Schwachholz.

Weitere Vorteile und Einzelheiten der Erfindung ergeben sich aus der nachfolgenden Beschreibung, bevorzugter Ausführungsbeispiele sowie anhand der Zeichnung; diese zeigt in

Fig. 1    eine perspektivische, vereinfachte Darstellung einer erfindungsgemässen Vorrichtung in Gebrauchslage;

Fig. 2    eine perspektivische, vergrösserte Ansicht eines Teils der erfindungsgemässen Vorrichtung in einer anderen Gebrauchslage;

Fig. 3    eine perspektivische, vergrösserte Ansicht eines weiteren Teil der erfindungsgemässen Vorrichtung;

Fig. 4    eine Teilansicht aus Fig. 1 in einer anderen Blickrichtung.

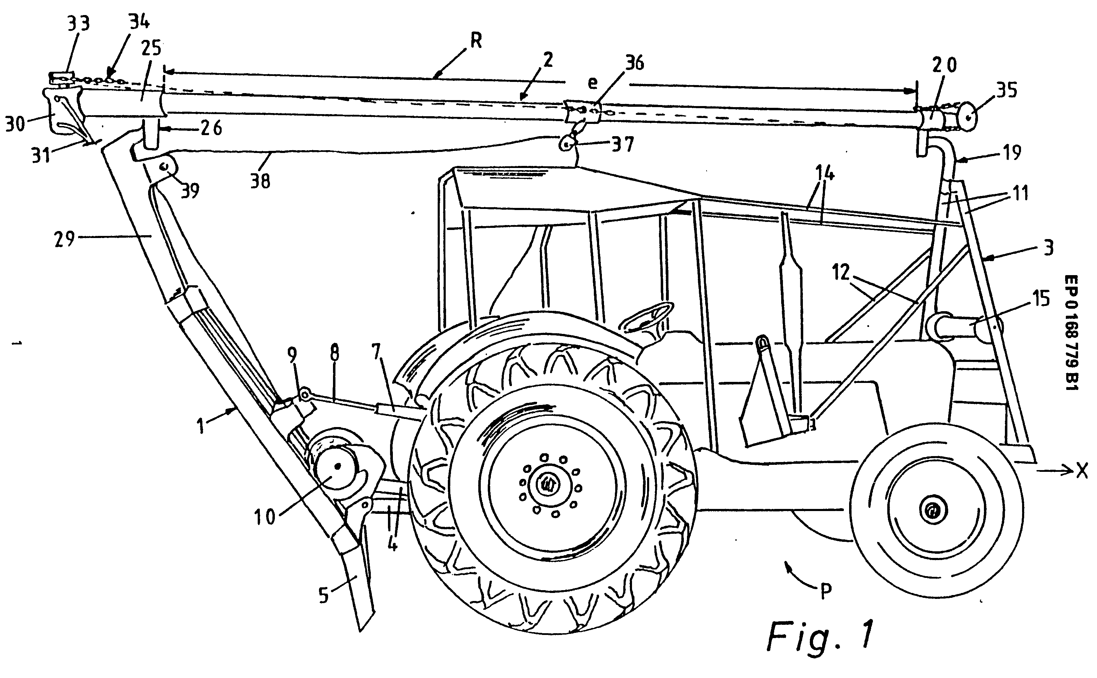

Nach Fig. 1 ist eine Vorrichtung R zum Rücken von Langholz, insbesondere von Schwachholz, mit einer Zugmaschine P in Verbindung gebracht. Dies hat zum einen den Vorteil, dass für den Antrieb der Vorrichtung R die Hydraulik der Zugmaschine mitbenutzt werden kann und zum anderen die Zugmaschine selbst als Gewicht zum Abstützen der Vorrichtung R dient.

Die erfindungsgemässe Vorrichtung R besteht nach Fig. 1 im wesentlichen aus drei Teilen, nämlich einem Stützschild 1, einem Führungsrohr 2 und einem Stirngerüst 3. Der Stützschild 1 ist im vorliegenden Ausführungsbeispiel an das Hydraulikgestänge 4 der Zugmaschine P angekoppelt und kann mit diesem angehoben bzw. abgesenkt werden. Bei Absenken trifft der Stützschild 1 mit Stelzen 5 auf Waldboden oder einen anderen Grund und bietet so ein Wiederlager gegen die Zugrichtung der einzuholenden Stämme. Weiterhin verbindet ein Zylinder-Kolben-System den Stützschild 1 mit der Zugmaschine P, wobei der Zylinder 7 an der Zugmaschine P angelenkt, der Kolben 8 an einer Leiste 9 des Stützschildes 1 angeflanscht ist. Durch die Bewegung des Kolbens 8 kann die Lage des Stützschildes 1 zur Fahrtrichtung x verändert werden. Am Stützschild 1 selbst ist noch eine Winde 10 montiert, welche - nicht näher gezeigt - hydraulisch betrieben wird.

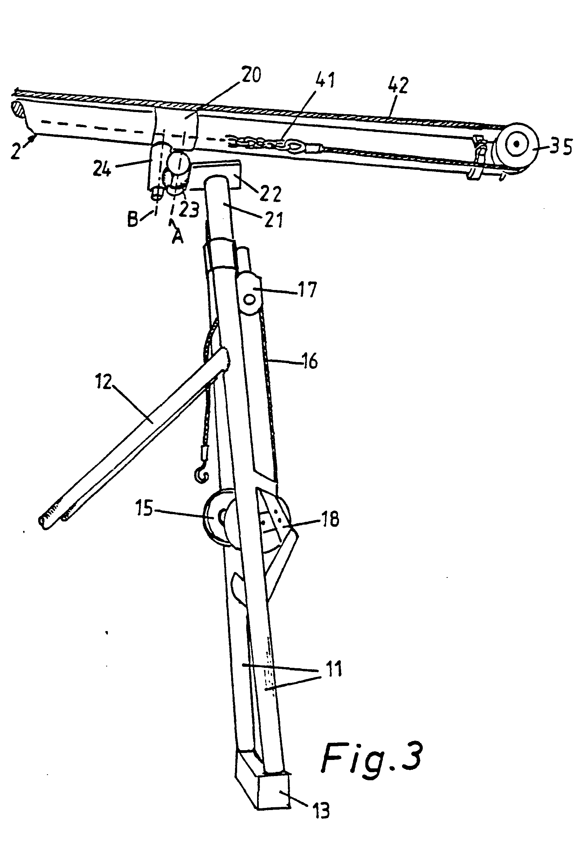

An der Vorderseite der Zugmaschine P gegenüber dem Stützschild 1 ist das Stirngerüst 3 lösbar befestigt. Hierzu dienen der Übersichtlichkeit halber nicht dargestellte Befestigungselemente, welche u.a. einen zwei Stützstreben 11 haltenden Querträger 13 (Fig. 3) miteinander und mit Rahmenteilen der Zugmaschine P verbinden. Der weiteren Halterung des Stirngerüstes 3 dienen auch Querstreben 12 und Dachstreben 14. Zwischen den beiden Stützstreben 11 lagert eine zweite Winde 15, von welcher ein Seil 16 (Fig. 3) entnommen werden kann, mittels dessen eine weitere Absicherung der Vorrichtung R und der Zugmaschine P gegen den Zug der einzuholenden Stämme erfolgt. Das Seil 16 ist über eine Umlenkrolle 17 geführt. An der zweiten Winde 15 sind (in Fig. 3 nur schematisch angedeutet) Bremseinrichtungen bzw. - rahmen 18 vorgesehen.

Den Stützstreben 11 ist nach ihrer Verbindung ein Gelenkteil 19 aufgesetzt, welches andererseits eine Hülse 20 aufweist, in der das Führungsrohr 2 gleiten kann. Das Gelenkteil 19 besteht nach Fig. 3 aus einem Rohrabschnitt 21, welcher von einer Platte 22 abgedeckt ist, an der das erste Drehgelenk 23 mit einer waagrechten Gelenkachse A quer zur Fahrtrichtung x festliegt. Ein zweites Drehgelenk 24 mit einer Achse B senkrecht zur Achse A ist an dem ersten Drehgelenk 23 angeordnet und mit der Hülse 20 verbunden.

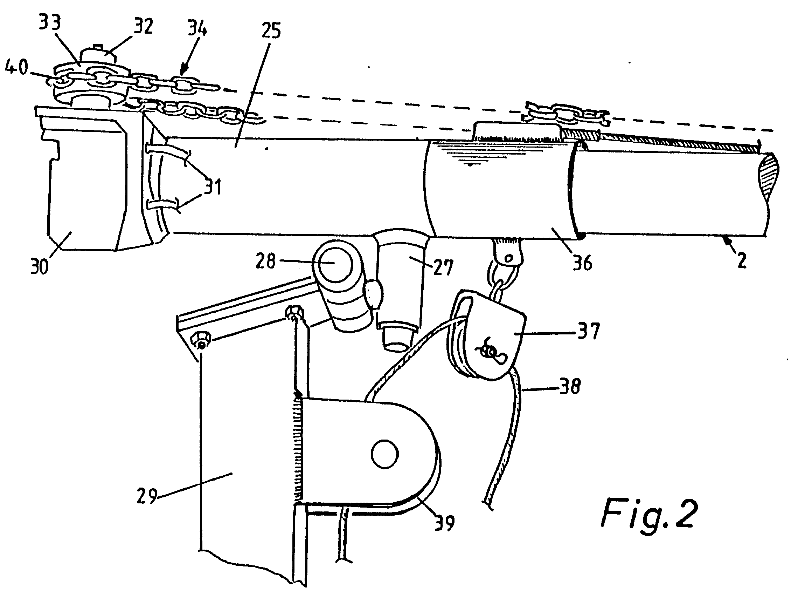

Die Hülse 20 umfasst das Führungsrohr 2 so, dass es in ihr in begrenztem Umfang gleiten kann. Das Führungsrohr 2 steckt andernends fest in einer Aufnahmebuchse 25 (Fig. 2), welche wiederum über ein aus zwei Drehgelenken 27 und 28 bestehendes Gelenkteil 26 mit einem Kastenprofil 29 des Stützschildes 1 verbunden ist.

Am Ende der Aufnahmebuchse 25 befindet sich ein Gehäuse 30 zur Aufnahme eines nicht näher dargestellten Antriebs, welcher hydraulisch über angedeutete Leitungen 31 betrieben wird. Von diesem Antrieb ragt aus dem Gehäuse 30 eine Antriebswelle 32, welcher ein Antriebsrad 33 aufgesetzt ist. Dieses Antriebsrad 33 umschlingt ein Antriebselement 34, welches von dem Antriebsrad 33 zu einer Umlenkrolle 35 am gegenüberliegenden Ende des Führungsrohres 2 und wieder zurück führt. Auf diesem Wege ist es - nicht gezeigt - mit einer Rohrhülse 36 verbunden, welche als Laufkatze für eine Rolle 37 dient, über die ein Zugseil 38 geführt ist, welches von der Winde 10 über eine weitere Umlenkrolle 39 kommt. Da das Antriebsrad 33 eine Nut 40 auf seinem Umfang aufweist, welche den Gliedern einer Kette nachgebildet ist, besteht das Antriebselement 34 zum Teil aus einer Kette 41. Wie insbesondere aus Fig. 3 ersichtlich ist, wird diese Kette 41 nach einer bestimmten Strecke, welche etwa der höchstmöglichen Bewegungsbahn 1 der Rohrhülse 36 zwischen Aufnahmebuchse 25 und Hülse 20 entspricht, von einem Drahtseil 42 abgelöst, welches leichter über die Umlenkrolle 35 führbar ist. Auf diese Weise wird der Ausgangspunkt des Zugseils 38 für das Einholen der Stämme durch die Position der Rohrhülse 36 bestimmt. Diese Position kann erfindungsgemäss beim Ausziehen des Zugseils von einer Bedienungsperson aus dem Bestand selbst ferngesteuert und nach Wunsch verändert werden, wobei die Fernsteuerung Impulse an die den Antrieb versorgende Hydraulik abgibt, welcher über die Antriebswelle das Antriebselement 34 bewegt.

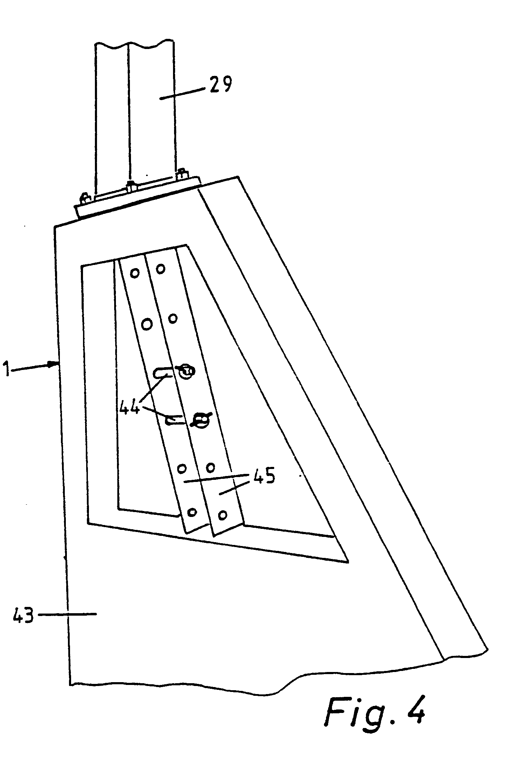

In Fig. 4 ist ein Ausschnitt aus dem Stützschild 1 gezeigt, welcher insbesondere den eigentlichen, als Schild 43 ausgebildeten Teil erkennen lässt. Dieser dient zum Abfangen von grösseren, normal gerückten Stämmen, wobei ein hierfür bestimmtes Zugseil - nicht näher dargestellt - über um Bolzen 44 zwischen zwei Profilstreifen 45 drehbar gelagerte Rollen geführt ist und von einer dritten Winde kommt. Es ist auch daran gedacht, die Winde 10 und das Zugseil 38 hierfür zu verwenden.

**Patentansprüche**

1. Verfahren zum Vorliefern von Holzstämmen mit einem Zugseil (38), welches von einer Winde (10) in Richtung auf den zu rückenden Stamm hin abgerollt und nach dem Anbinden des Stammes wieder eingeholt wird, wobei das Zugseil (38) nach der Winde (10) über eine ortsveränderbare Rolle (37) od. dgl. geführt wird, dadurch gekennzeichnet, daß die Rolle (37) etwa senkrecht zur Vorlieferrichtung der Holzstämme in einer solchen Höhe vom Boden bewegt wird, daß das angebundene Ende des vorzuliefernden Stammes beim Einholen des Zugseiles (38) angehoben wird.

2. Verfahren nach Anspruch 1, dadurch gekennzeichnet, daß die Position der Rolle od. dergl. als Ausgangsposition des Zugseiles ferngesteuert verändert wird.

3. Vorrichtung zum Vorliefern von Holzstämmen mit einem Zugseil (38), welches von einer Winde (10) in Richtung auf den zu rückenden Stamm abrollbar und nach dem Anbinden des Stammes wieder einholbar ist, wobei das Zugseil (38) nach der Winde (10) über eine ortsveränderbare Rolle (37) od. dgl. geführt ist, dadurch gekennzeichnet, daß die Rolle (37) im wesentlichen senkrecht zur Vorlieferrichtung der Holzstämme entlang einer an einer Zugmaschine (P) od. dgl. befestigten Führung ortsveränderbar angeordnet ist, wobei die Führung in einer solchen Höhe zum Boden verläuft, daß das angebundene Ende des vorzuliefernden Stammes beim Einholen des Zugseiles (38) angehoben ist.

4. Vorrichtung nach Anspruch 3, dadurch gekennzeichnet, daß die Rolle (37) mit einer Rohrhülse (36) verbunden und mit dieser über eine bestimmte Strecke (1) an einem Führungsrohr (2) bewegbar ist, welches über der Zugmaschine (P) angeordnet ist.

5. Vorrichtung nach Anspruch 4, dadurch gekennzeichnet, daß die Strecke (1) von einer Hülse (20) und einer Aufnahmebuchse (25) begrenzt ist.

6. Vorrichtung nach einem der Ansprüche 3 bis 5, dadurch gekennzeichnet, daß die Rolle (37) bzw. die Rohrhülse (36) von einem Antrieb ggfs. ferngesteuert bewegbar ist.

7. Vorrichtung nach Anspruch 6, dadurch gekennzeichnet, daß der Antrieb in einem Gehäuse (30) an der Aufnahmebuchse (25) untergebracht ist, wobei eine Antriebswelle (32) aus dem Gehäuse (30) ragt, der ein Antriebsrad (33) aufgesetzt ist, welches ein mit der Rohrhülse (36) bzw. der Rolle (37) verbundenes Antriebselement (34) antriebt, das über eine Umlenkrolle (35) jenseits der Antriebsrolle an dem Führungsrohr (2) nach der Hülse (20) geführt ist.

8. Vorrichtung nach Anspruch 7, dadurch gekennzeichnet, daß dem Antriebsrad (33) eine Nut (40) umfangsseitig eingeformt ist, welche Gliedern einer Kette (41) nachgebildet ist, wobei das Antriebselement (34) zum Teil aus dieser Kette (41), zum anderen Teil aus einem Drahtseil (42) geformt ist.

9. Vorrichtung nach einem der Ansprüche 4 bis 8, dadurch gekennzeichnet, daß die Aufnahmebuchse (25) einerseits und die Hülse (20) andererseits jeweils über ein Gelenkteil (19 bzw. 26) mit einem Stützschild (1) bzw. einem Stirngerüst (3) verbunden sind.

10. Vorrichtung nach Anspruch 9, dadurch gekennzeichnet, daß beide Gelenkteile (19, 26) jeweils aus zwei zueinander senkrecht angeordneten Drehgelenken (23, 24; 27, 28) bestehen.

11. Vorrichtung nach Anspruch 9, dadurch gekennzeichnet, daß das Stirngerüst (3) aus zwei Stützstreben (11) besteht, welche zwischen sich eine zweite Winde (15) für ein Seil (16) zum Halten der Vorrichtung (R) aufnehmen.

12. Vorrichtung nach einem der Ansprühe 9 bis 11, dadurch gekennzeichnet, daß der Stützschild (1) die Winde (10) trägt.

13. Vorrichtung nach Anspruch 12, dadurch gekennzeichnet, daß der Stützschild (1) einen gegenteiligen Schild (43) zum Abfangen von Stämmen aufweist, welche von einem weiteren Seilzug mit Winde über an Bolzen (44) zwischen Profilstreifen (45) gelagerte Rollen einholbar sind.

14. Vorrichtung nach wenigstens einem der Ansprüche 9 bis 13, dadurch gekennzeichnet, daß der Stützschild (1) an das Hydraulikgestänge (4) einer Zugmaschine (P) angeschlossen ist und daß das Führungsrohr (2) die Zugmaschine (P) übergreift und mit dem Stirngerüst (3) an deren Vorderfront festgelegt ist.

15. Vorrichtung nach Anspruch 14, dadurch gekennzeichnet, daß die Lage des Stützschildes (1) zur Fahrtrichtung (x) der Zugmaschine (P) über einen in einem Zylinder (7) bewegbaren Kolben (8), der an einer Leiste (9) am Stützschild (1) anschließt, veränderbar ist.

16. Vorrichtung nach Anspruch 14 oder 15, dadurch gekennzeichnet, daß die Hydraulik der Vorrichtung (R) an die Hydraulik der Zugmaschine (P) angeschlossen ist.

**Claims**

1. Method for delivering logs with a hauling rope (38), which is unwound from a winch (10) in the direction of the log to be moved and is hauled in again following the binding of the log and following winch (10) the hauling rope (38) is guided over a movable pulley (37) or the like, characterized in that the pulley (37) is moved approximately at right angles to the log delivery direction at such a height from the ground that the bound end of the log to be delivered is raised on hauling in the hauling rope (38).

2. Method according to claim 1, characterized in that the position of the pulley or the like is modified in remotely controlled manner as the starting position for the hauling rope.

3. Device for delivering logs with a hauling rope (38), which is unwound from a winch (10) in the direction of the log to be moved and is hauled in again following the binding of the log and following winch (10) the hauling rope (38) is guided over a movable pulley (37) or the like, characterized in that the pulley (37) is movably arranged along a guide fixed to a tractor (P) or the like, substantially perpendicularly to the log delivery direction, the guide being at such a height from the ground that the bound end of the log to be delivered is raised on hauling in the hauling rope (38).

4. Device according to claim 3, characterized in that the pulley (37) is connected to a tube socket (38) and is movable therewith over a certain distance (1) on a guide tube (2), which is positioned above the tractor (P).

5. Device according to claim 4, characterized in that the distance (1) is limited by a sleeve (20) and a receiving bush (25).

6. Device according to one of the claims 3 to 5, characterized in that the pulley (37) or the tube socket (36) is movable in optionally remotely controlled manner by a drive.

7. Device according to claim 6, characterized in that the drive is housed in a casing (30) of the receiving bush (25), a driving shaft (32) projecting out of the casing (30) and on it is mounted a driving wheel (33), which drives a driving element (34) connected to the tube socket (36) or pulley (37) and which is guided over a guide pulley (35) on the other side of the driving wheel on guide tube (2) to sleeve (20).

8. Device according to claim 7, characterized in that a groove (40) is circumferentially formed in the driving wheel (33) and simulates the links of a chain (41), the driving element (34) being partly formed by said chain (41) and partly by a wire rope (42).

9. Device according to one of the claims 4 to 8, characterized in that the receiving bush (25) on the one hand and the sleeve (20) on the other are in each case connected by means of a pivoting part (19 or 26) to a support plate (1) or an end structure (3).

10. Device according to claim 9, characterized in that both pivoting parts (19, 26) in each case comprise two swivel joints (23, 24; 27, 28) at right angles to one another.

11. Device according to claim 9, characterized in that the end structure (3) comprises two steadying struts (11), which receive between them a second vinch (19) for a rope (16) for holding device (R).

12. Device according to one of the claims 9 to 11, characterized in that the support plate (1) carries the winch (10).

13. Device according to claim 12, characterized in that the support plate (1) has an opposite plate (43) for collecting logs, which can be hauled in by a further rope and winch by means of pulleys mounted on bolts (44) between profile strips (45).

14. Device according to at least one of the claims 9 to 13, characterized in that the support plate (1) is connected to the hydraulic linkage (4) of a tractor (P) and that the guide tube (2) engages over the tractor (P) and is fixed at the front thereof to the end structure (3).

15. Device according to claim 14, characterized in that the position of the support plate (1) is variable with respect to the direction of the travel (x) of the tractor (P) by means of a piston (8) movable in a cylinder (7) and which is connected to a ledge (9) on support plate (1).

16. Device according to claims 14 or 15, characterized in that the hydraulics of device (R) connected to the hydraulics of tractor (P).


## Revendications

1. Procédé pour transporter des troncs d'arbres à l'aide d'un câble de traction (38) qui est dévidé d'un treuil (10) en direction du tronc à déplacer et qui après avoir été accroché au tronc est de nouveau rappelé, le câble de traction (38) passant après le treuil (10) sur un galet (37) d'emplacement variable, procédé caractérisé en ce que le galet (37) est déplacé sensiblement perpendiculairement à la direction d'amenée du tronc d'arbre à une hauteur par rapport au sol, telle que l'extrémité liée du tronc d'arbre à fournir soit soulevée lors du rappel du câble de traction (38).

2. Procédé selon la revendication 1, caractérisé en ce que la position du galet ou analogue est modifiée par télécommande comme position initiale du câble de traction.

3. Dispositif d'amenée de tronc d'arbre à l'aide d'un câble de traction (38) qui est dévidé d'un treuil (10) en direction du tronc d'arbre à déplacer et qui après accrochage du tronc d'arbre est de nouveau rappelé, le câble de traction (38) passant sur un galet (37) de position variable en aval du treuil (10), dispositif caractérisé en ce que le galet (37) est monté dans une position variable le long d'un moyen de guidage fixé à un tracteur (P) ou analogue, dans une direction essentiellement perpendiculaire à la direction d'amenée des troncs d'arbres, le guidage étant à une hauteur telle par rapport au sol que l'extrémité fixée du tronc d'arbre à amener soit soulevée lors du rappel du câble de traction (38).

4. Dispositif selon la revendication 3, caractérisé en ce que le galet (37) est relié à une douille tubulaire (36) et se déplace avec celle-ci sur un certain chemin (1) sur le tube de guidage (2), ce dernier étant monté au-dessus du tracteur (P).

5. Dispositif selon la revendication 4, caractérisé en ce que le chemin (1) est limité par une douille (20) et une douille de réception (25).

6. Dispositif selon l'une des revendications 3 à 5, caractérisé en ce que le galet (37) ou la douille tubulaire (36) est déplaçable par un moyen d'entraînement le cas échéant télécommandé.

7. Dispositif selon la revendication 6, caractérisé en ce que le moyen d'entraînement est logé dans un carter (30) de la douille de réception (15), un arbre d'entraînement (32) sortant du boîtier (30) qui est rapporté sur une roue d'entraînement (33), cette dernière entraînant un élément (34) relié à la douille tubulaire (36) ou au galet (37), cet élément d'entraînement étant guidé par un galet de renvoi (37) de l'autre côté du galet d'entraînement sur le tube de guidage (2) vers la douille (20).

8. Dispositif selon la revendication 7, caractérisé en ce qu'une rainure (40) est réalisée à la périphérie de la roue d'entraînement (33), cette rainure ayant la forme des maillons d'une chaîne (41) et l'élément d'entraînement (34) est en partie constitué par la chaîne (41) et en partie par un câble (42).

9. Dispositif selon l'une des revendications 4 à 8, caractérisé en ce que, d'une part, la douille de réception (25) et, d'autre part, la douille (20) sont reliées respectivement par une partie articulée (19, 26) à un panneau d'appui (1) ou à un bâti frontal (3).

10. Dispositif selon la revendication 9, caractérisé en ce que les deux parties articulées (19, 26) sont constituées respectivement de deux articulations en rotation (23, 24; 27, 28) disposées perpendiculairement l'une par rapport à l'autre.

11. Dispositif selon la revendication 9, caractérisé en ce que le bâti frontal (3) se compose de deux montants (11) qui reçoivent entre eux un second treuil (15) pour un câble (16) servant à maintenir le dispositif (R).

12. Dispositif selon l'une des revendications 9 à 11, caractérisé en ce que le panneau d'appui (1) porte le treuil (10).

13. Dispositif selon la revendication 12, caractérisé en ce que le panneau d'appui (1) présente un panneau (43) opposé pour recevoir les troncs d'arbres qui sont rappelés par un autre câble de traction avec un treuil en passant sur des galets montés sur des goujons (44) entre les bandes profilées (45).

14. Dispositif selon au moins l'une des revendications 9 à 13, caractérisé en ce que le panneau d'appui (1) est relié à la tringlerie hydraulique (4) d'un tracteur (P) et en ce que le tube de guidage (2) passe par-dessus le tracteur (P) et est fixé au châssis frontal (3) à l'avant.

15. Dispositif selon la revendication 14, caractérisé en ce que la position du panneau d'appui (1) par rapport à la direction de déplacement (X) du tracteur (P) peut être modifiée par l'intermédiaire d'un piston (8) mobile dans un cylindre (7), piston qui est relié au panneau d'appui (1) par un longeron (9).

16. Dispositif selon la revendication 14 ou 15, caractérisé en ce que le circuit hydraulique du dispositif (R) est raccordé au circuit hydraulique du tracteur (P).

Fig. 1

Fig.2

EP 0 168 779 B1

*Fig.3*

Fig. 4